# EUROPEAN PATENT APPLICATION

(11) **EP 4 725 659 A1**
(43) Date of publication of application: **15.04.2026**
(21) Application number: 25207216.0
(22) Date of filing: 07.10.2025
(51) Int. Cl.: B25J 9/16, G05B 19/423, G05B 19/425, B23K 9/00, B23K 11/00, B23K 20/00

(54) **ROBOT CONTROL SYSTEM**

(30) Priority: 11.10.2024 JP 2024178708
(71) Applicant: DAIHEN Corporation, Yodogawa-ku Osaka-shi, Osaka 532-8512 (JP)
(72) Inventor: FUJISAWA, Sho, Osaka, 532-8512 (JP); NAKAGAWA, Shinichiro, Osaka, 532-8512 (JP)
(74) Representative: Betten & Resch

(57) **Abstract**

The present invention provides a robot control system that can reduce the burden on the operator. A controller 20 includes: an acceptance unit 21 that accepts a rough teaching instruction regarding a rough teaching point, which is a tentative teaching point; an accumulation unit 22 that accumulates teaching data of the rough teaching point in response to the acceptance of the rough teaching instruction; and a control unit 24 that specifies a sensing teaching point corresponding to the rough teaching point, based on sensing results obtained by causing a sensor of a robot 10 to perform sensing using the rough teaching point as a reference. The accumulation unit 22 accumulates teaching data of the sensing teaching point. The control unit 24 controls the robot 10 using the sensing teaching point. In this manner, it is possible to reduce the burden on the operator during teaching, and to operate the robot 10 with a higher level of precision using the sensing teaching point.

## Description

### BACKGROUND OF THE INVENTION

### 1. Field of the Invention

The present invention relates to a robot control system in the teaching-playback method.

### 2. Description of Related Art

Conventionally, according to robot control systems in the teaching-playback method, the accurate position at which a robot performs an operation such as welding is taught, and during playback control, the robot's end effector is controlled to move to that taught position. Even if teaching and playback are performed accurately, if the workpiece is misaligned, the robot cannot perform accurate processes. Therefore, workpiece misalignment has been also detected by using a touch sensor of an arc welding robot. For a robot with a touch sensor, see JP 2001-259836A, for example.

JP 2001-259836A is an example of related art.

Robot control systems in the teaching-playback method have an issue in that more careful operations are required when teaching accurate positions, which places a heavy burden on the operator.

The present invention was made in order to address the above-described issue, and it is an object thereof to provide a robot control system that can reduce the burden on the operator during teaching.

In order to achieve the above-described object, an aspect of the present invention is directed to a robot control system including a robot that has multiple joints and a controller that controls the robot, wherein the robot has a sensor for sensing a detection target, the controller includes: an acceptance unit that accepts a rough teaching instruction regarding a rough teaching point, which is a tentative teaching point; an accumulation unit that accumulates teaching data of the rough teaching point according to angles of the respective joints of the robot when the rough teaching instruction is accepted; and a control unit that causes the sensor to perform sensing using the rough teaching point as a reference, and uses sensing results of the sensor to specify a sensing teaching point, which is a teaching point that corresponds to the rough teaching point and is based on the sensing results, the accumulation unit accumulates teaching data of the sensing teaching point, and the control unit controls the robot using the sensing teaching point.

With the robot control system according to an aspect of the present invention, teaching is required only for a rough teaching point, which is a tentative teaching point, and thus the burden on the operator is reduced. Furthermore, through sensing with a sensor using the rough teaching point as a reference, it is possible to accumulate teaching data of a sensing teaching point, which is an accurate teaching point. The use of the sensing teaching point makes it possible to control a robot more accurately.

### BRIEF DESCRIPTION OF THE DRAWINGS

FIG. 1 is a schematic view showing the configuration of a robot control system according to an embodiment of the present invention.
FIG. 2 is a view showing an example of rough teaching points and sensing teaching points in the embodiment.
FIG. 3 is a flowchart showing an operation of a controller in the embodiment.
FIG. 4 is a view showing an example of rough teaching points and a sensing teaching point in the embodiment.

### DETAILED DESCRIPTION OF THE INVENTION

Hereinafter, an embodiment of a robot control system according to the present invention will be described by way of an embodiment. The constituent elements and steps denoted by the same reference numerals in the following embodiment are similar or corresponding constituent elements and steps, and thus a description thereof may not be repeated. With the robot control system according to this embodiment, teaching data of a sensing teaching point is acquired based on results of sensing using a rough teaching point (which is a tentative teaching point) as a reference and is accumulated, and a robot is controlled using the sensing teaching point.

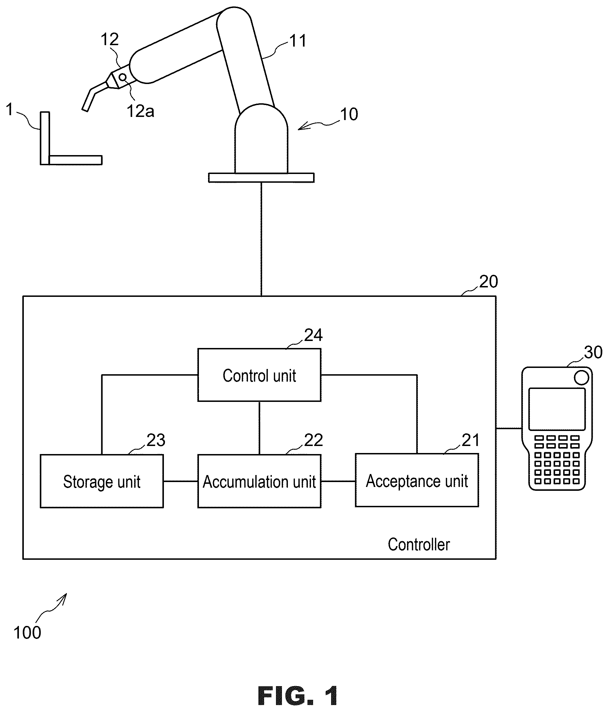

FIG. 1 is a schematic view showing the configuration of a robot control system 100 according to this embodiment. The robot control system 100 according to this embodiment includes a robot 10 that has multiple joints and a controller 20 that controls the robot 10, and may further include a teaching pendant 30 as necessary. If the robot 10 is a welding robot, the robot control system 100 may further include a welding power source, a wire feeder, and the like, as necessary. The robot 10 includes a robot main body 11 and an end effector 12 that is attached to an end of the robot main body 11.

The robot 10 may include, for example, multiple arms connected by joints driven by motors. The robot 10 may be, for example, a vertically articulated robot, a horizontally articulated robot, or any other type of robot. The robot 10 may be, for example, a transport robot, a welding robot, an assembly robot, a painting robot, or a robot for other applications. The end effector 12 may be specific to the application of the robot 10. For example, if the robot 10 is a welding robot, the end effector 12 may be a welding torch. For example, if the robot 10 is a transport robot or an assembly robot, the end effector 12 may be a gripper that grips an object to be transported or an object to be assembled.

Furthermore, the robot 10 includes a sensor for sensing a detection target. This sensor may be, for example, a touch sensor, a laser sensor, a vision sensor (i.e., an image sensor), or any other sensor. The detection target of the sensor may be, for example, a workpiece to be welded in the case in which the robot 10 is a welding robot, an object to be transported in the case in which the robot 10 is a transport robot, or an object to be assembled in the case in which the robot 10 is a assembly robot.

Furthermore, the robot 10 may or may not be a collaborative robot, for example. If the robot 10 is a collaborative robot, the end effector 12 of the robot 10 may be provided with an input interface for performing direct teaching. The input interface for performing direct teaching may be, for example, a button 12a shown in FIG. 1.

For example, if the robot 10 is a collaborative robot, teaching of the robot 10 may be performed through direct teaching. The teaching of the robot 10 may be performed, for example, using the teaching pendant 30.

In this embodiment, a case will be mainly described in which the robot 10 is a collaborative robot and is an arc welding robot, the end effector 12 is a welding torch, and the sensor included in the robot 10 is a touch sensor that senses the position of a workpiece 1, which is a detection target, by bringing a consumable electrode into contact with the detection target.

The controller 20 controls the robot 10, and includes an acceptance unit 21, an accumulation unit 22, a storage unit 23, and a control unit 24, as shown in FIG. 1.

The acceptance unit 21 accepts a rough teaching instruction regarding a rough teaching point, which is a tentative teaching point. The rough teaching point is not an accurate teaching point that is used in the playback control of the robot 10 according to its application, but is a teaching point that is used as a reference when causing the sensor of the robot 10 to sense the accurate teaching point. If the robot 10 performs welding, for example, the rough teaching point may not be a point on a weld line of the workpiece 1 but may be a point at a distance from the workpiece 1. The rough teaching point is preferably a point in the vicinity of a sensing teaching point, which is an accurate teaching point corresponding to the rough teaching point. The rough teaching instruction may be an instruction to accumulate teaching data of the rough teaching point.

The rough teaching instruction may be input, for example, through direct teaching or via the teaching pendant 30. That is to say, for example, the acceptance unit 21 may accept a rough teaching instruction through direct teaching of the robot 10 or may accept a rough teaching instruction from the teaching pendant 30. In the case of the former, for example, the acceptance unit 21 may accept a rough teaching instruction in response to the pressing of the button 12a of the end effector 12. As will be described later, a rough teaching point has a predetermined relationship with a sensing teaching point, and thus the operator preferably inputs a rough teaching instruction regarding a rough teaching point to the controller 20 such that the sensing teaching point is located at a desired point.

The acceptance unit 21 may accept, for example, multiple types of rough teaching instructions. As an example, the acceptance unit 21 may accept a first rough teaching instruction and a second rough teaching instruction. There is no limitation on the number of types. The number of types of rough teaching instruction may be, for example, two or three or more.

The acceptance unit 21 may accept an instruction other than the rough teaching instruction as well. As an example, the acceptance unit 21 may accept an operation instruction for the robot 10. This operation instruction may be, for example, an operation instruction for the robot main body 11 and may be accepted in the case in which the operator performs teaching. As another example, the acceptance unit 21 may accept, together with a rough teaching instruction, an operation instruction for the end effector 12 according to a rough teaching point corresponding to the rough teaching instruction, for example, an instruction to start or end welding. The acceptance unit 21 may accept, for example, an instruction to start playback control. The instruction to start a playback operation may, for example, allow specifying whether or not to operate the end effector 12, for example, whether or not to perform welding with the welding torch.

The acceptance unit 21 may or may not include a device for acceptance (e.g., a communication device, etc.). The acceptance unit 21 may be realized by hardware, or may be realized by software such as a driver that drives a predetermined device.

The accumulation unit 22 accumulates teaching data of the rough teaching point in the storage unit 23 according to the angles of the respective joints of the robot 10 when the rough teaching instruction is accepted by the acceptance unit 21. The teaching data of the rough teaching point may be, for example, information indicating the position and the posture of the end effector 12 of the robot 10 at the time when the rough teaching instruction is accepted, or information indicating the angles of the respective joints of the robot 10 at that time. These pieces of information are substantially the same because they can be converted by the forward or inverse kinematics of the robot 10. The same is assumed to be true for the accumulation of teaching data of the sensing teaching point, which will be described later. For example, when the rough teaching instruction is accepted by the acceptance unit 21, the accumulation unit 22 may acquire the angles of the respective joints of the robot 10 from the control unit 24, and accumulate teaching data indicating the angles of the respective joints, or teaching data indicating the position and the posture of the end effector 12 obtained by converting the angles of the respective joints according to the forward kinematics, in the storage unit 23.

The accumulation unit 22 may accumulate teaching data of two or more rough teaching points in the storage unit 23. For example, if an rough teaching instruction is accepted by the acceptance unit 21 two or more times, in response to the two or more times of acceptance of the rough teaching instructions, the accumulation unit 22 may accumulate teaching data of the two or more rough teaching points, in the storage unit 23. In this case, the accumulation unit 22 preferably accumulates the two or more pieces of teaching data such that the order of accumulation is known.

The accumulation unit 22 may also accumulate the operation instruction for the end effector 12 and the type of interpolation such as linear interpolation, joint interpolation, and circular interpolation according to the information accepted by the acceptance unit 21, together with the teaching data of the rough teaching point. The operation instruction for the end effector 12 may be, for example, an instruction to start or end welding in the case in which the end effector 12 is a welding torch, or an instruction to grip or release an object to be gripped in the case in which the end effector 12 is a gripper.

Furthermore, if multiple types of rough teaching instructions are accepted by the acceptance unit 21, in response to the acceptance of a rough teaching instruction, the accumulation unit 22 may accumulate an operation instruction that is for the robot 10 and corresponds to the type of accepted rough teaching instruction, in the storage unit 23, together with the teaching data of the rough teaching point. The operation instruction for the robot 10 may be, for example, an operation instruction for the end effector 12 of the robot 10, an operation instruction regarding the sensor of the robot 10, that is, a sensing instruction, or other operation instructions regarding the robot 10. As an example, if multiple pairs of information for identifying the types of rough teaching instructions and operation instructions for the robot 10 are stored in the storage unit 23, the accumulation unit 22 may specify an operation instruction that is for the robot 10 and corresponds to the type of accepted rough teaching instruction, using the multiple pairs, and accumulate teaching data of the specified operation instruction in the storage unit 23. In this manner, the operator can automatically set an operation instruction for the robot 10 according to the type of rough teaching instruction by selecting the type of instruction when inputting the rough teaching instruction.

The accumulation unit 22 accumulates teaching data of the sensing teaching point corresponding to the rough teaching point, in the storage unit 23. The sensing teaching point is a teaching point that corresponds to the rough teaching point and is based on the sensing results. The sensing results may be results of sensing that is performed by the sensor included in the robot 10 using the rough teaching point as a reference as will be described later. That is to say, the sensing teaching point is specified based on the results of sensing using the rough teaching point as a reference. The sensing teaching point is specified by the control unit 24 as will be described later. The sensing teaching point may be, for example, information indicating the position of the end effector 12 of the robot 10. In this case, the posture of the end effector 12 indicated by the teaching data of the sensing teaching point may be, for example, the same as the posture of the end effector 12 indicated by the teaching data of the rough teaching point corresponding to the sensing teaching point. As an example, the accumulation unit 22 may overwrite the teaching data of the rough teaching point stored in the storage unit 23 with teaching data of the sensing teaching point corresponding to the rough teaching point.

The sensing teaching point is an accurate teaching point that is used in the playback control of the robot 10 according to its application. That is to say, the sensing teaching point corresponds to a teaching point taught by the operator in conventional robot control systems. If the robot 10 performs welding, the sensing teaching point may be, for example, a teaching point on a weld line of the workpiece 1.

Information accumulated by the accumulation unit 22 is stored in the storage unit 23. For example, teaching data such as rough teaching points, sensing teaching points, operation instructions for the end effector 12, the type of interpolation, and the like may be stored in the storage unit 23. Other information may also be stored in the storage unit 23. The storage unit 23 is preferably a non-volatile recording medium, but it may alternately be realized by a volatile recording medium. The recording medium may be, for example, a semiconductor memory, a magnetic disk, or the like.

The control unit 24 controls the robot 10. The control unit 24 may control, for example, the joints of the robot 10, the end effector 12 of the robot 10, the sensor of the robot 10, or other elements related to the robot 10. The control of the robot 10 may be performed, for example, according to operation instructions for the robot 10 accepted by the acceptance unit 21, or according to rough teaching points, sensing teaching points, operation instructions for the end effector 12, sensing instructions for the sensor, and the like indicated by the teaching data stored in the storage unit 23.

The control unit 24 may cause the sensor included in the robot 10 to perform sensing using, as a reference, the rough teaching point indicated by the teaching data. The sensing is performed in order to specify a sensing teaching point. Accordingly, for example, if the robot 10 is a welding robot, a sensing teaching point on a weld line of the workpiece 1 to be welded may be specified through this sensing. If the robot 10 has a touch sensor, the control unit 24 may cause sensing to be performed by moving the touch sensor using the rough teaching point as a reference point. The touch sensor may be moved by operating the robot main body 11. If the robot 10 has a laser sensor or a vision sensor, the control unit 24 may cause sensing to be performed with the laser sensor or the vision sensor in a predetermined direction using the rough teaching point as a reference. The control unit 24 may or may not cause the robot main body 11 to operate for sensing using the laser sensor or vision sensor. The control unit 24 may, for example, specify a sensing teaching point corresponding to the rough teaching point, based on the sensing results of the sensor using the rough teaching point as a reference. Accordingly, if the operator performs teaching regarding a rough teaching point, teaching data of the sensing teaching point corresponding to the rough teaching point is automatically acquired, which is advantageous in that the operator does not have to strictly perform teaching regarding a more accurate teaching point.

The control unit 24 may control the robot 10 using the sensing teaching point indicated by the teaching data. The control of the robot 10 using the sensing teaching point causes the robot 10 to perform intended operations. For example, if the robot 10 is a welding robot, the robot 10 may be controlled using the sensing teaching point to perform welding on the workpiece 1. Controlling the robot 10 using the sensing teaching point may be, for example, controlling the end effector 12 of the robot 10 to move to the position of sensing teaching point. The posture of the end effector 12 at that time may be, for example, the posture indicated by the teaching data of the sensing teaching point.

Furthermore, the control unit 24 may perform, on the robot 10, first type of playback control that does not operate the end effector 12 and second type of playback control that operates the end effector 12. The second type of playback control may be performed only in the case in which two or more sensing teaching points respectively corresponding to the two or more rough teaching points are specified through the first type of playback control and teaching data of the two or more sensing teaching points is accumulated by the accumulation unit 22 in the storage unit 23. That is to say, the control unit 24 may not be able to perform the second type of playback control in the case in which the teaching data of the sensing teaching point is not accumulated in response to the first type of playback control. This can prevent, for example, the end effector 12 from being operated during playback control using a rough teaching point. Such control is particularly effective in the case in which the first type of playback control that does not operate the end effector 12 or the second type of playback control that operates the end effector 12 is performed in response to instructions from the operator. In this case, for example, a performed flag indicating whether or not the accumulation of a sensing teaching point in response to the first type of playback control that does not operate the end effector 12 has been performed may be stored in the storage unit 23. The performed flag may be set, for example, to "1" in the case in which the accumulation of a sensing teaching point in response to the first type of playback control that does not operate the end effector 12 has been performed, and to "0" in the case in which the accumulation of a sensing teaching point has not been performed. The initial value of the performed flag may be "0". For example, the control unit 24 may set the performed flag to "1" after the accumulation of a sensing teaching point in response to the first type of playback control that does not operate the end effector 12 has been performed. In the case of starting the second type of playback control that operates the end effector 12, the control unit 24 may not perform the second type of playback control in the case in which the performed flag is "0", and may perform the second type of playback control in the case in which the performed flag is "1".

Next, processing will be described that accumulates an operation instruction for the end effector 12 according to the type of rough teaching instruction. For example, in the case of performing direct teaching using the button 12a of the end effector 12, the first rough teaching instruction may be accepted by the acceptance unit 21 in response to a short press of the button 12a, and the second rough teaching instruction may be accepted by the acceptance unit 21 in response to a long press of the button 12a. As another example, the first rough teaching instruction may be accepted in response to the pressing of a first button of the end effector 12, and the second rough teaching instruction may be accepted in response to the pressing of a second button of the end effector 12. For example, the accumulation unit 22 may accumulate, in response to the acceptance of the first rough teaching instruction, 1. to 3. of the following program as the teaching data, together with the teaching data of the first rough teaching point according to the angles of the respective joints of the robot 10 at that time, in the storage unit 23, and accumulate, in response to the acceptance of the second rough teaching instruction, 4. to 6. of the following program as the teaching data, together with the teaching data of the second rough teaching point according to the angles of the respective joints of the robot 10 at that time, in the storage unit 23.
1. LINE
2. SF10 (P1)
3. AS
4. LINE
5. SF10 (P2)
6. AE

In the program, LINE indicates that the type of interpolation is linear interpolation, SF10 (P1) and SF10 (P2) are instructions to specify a sensing teaching point corresponding to a rough teaching point based on results of sensing using the rough teaching point as a reference and to replace teaching data of the rough teaching point with teaching data of the specified sensing teaching point, AS is an operation instruction to start welding, and AE is an operation instruction to end the welding. Therefore, this program may be considered to contain the operation instructions for the robot 10 and the instructions to replace the teaching data. After the teaching data of the rough teaching point is replaced with the teaching data of the sensing teaching point in response to an instruction such as SF10 (P1), instructions such as SF10 (P1) may not be executed. In this manner, an instruction to replace teaching data of the rough teaching point with teaching data of the sensing teaching point based on results of sensing using the rough teaching point as a reference may be accumulated in the storage unit 23 according to the type of rough teaching instruction. In response to the instruction, the accumulation unit 22 may perform processing that replaces teaching data of the rough teaching point with teaching data of the sensing teaching point. Accordingly, it is no longer necessary to manually input instructions to replace teaching data of the rough teaching point with teaching data of the sensing teaching point, thereby improving the convenience for the operator. As an example, if multiple pairs of information for identifying the types of rough teaching instructions and programs are stored in the storage unit 23, the accumulation unit 22 may read a program corresponding to the type of accepted rough teaching instruction, using the multiple pairs, from the storage unit 23, and accumulate the read program as the teaching data in the storage unit 23.

If teaching data of the first and second rough teaching points and teaching data containing the above-described program are accumulated in the storage unit 23 and an instruction to start the first type of playback control that does not operate the end effector 12 is accepted by the acceptance unit 21, the control unit 24 may move the end effector 12 through linear interpolation to the first rough teaching point in response to "1. LINE", and specify a first sensing teaching point corresponding to the first rough teaching point, based on sensing results of the sensor using the first rough teaching point as a reference, in response to "2. SF10 (P1)". The accumulation unit 22 may accumulate the teaching data of the first sensing teaching point in the storage unit 23 through overwriting of the teaching data of the first rough teaching point. The control unit 24 may move the end effector 12 through linear interpolation to the second rough teaching point in response to "4. LINE", and specify a second sensing teaching point corresponding to the second rough teaching point, based on sensing results of the sensor using the second rough teaching point as a reference, in response to "5. SF10 (P2)". The accumulation unit 22 may accumulate the teaching data of the second sensing teaching point in the storage unit 23 through overwriting of the teaching data of the second rough teaching point. Thereafter, the performed flag may be set to "1". In the first type of playback control, the end effector 12 is not operated, and thus welding in response to "3. AS" and "6. AE" is not performed.

Then, if an instruction to start the second type of playback control that operates the end effector 12 is accepted by the acceptance unit 21, the control unit 24 moves a welding torch that is the end effector 12 through linear interpolation to the first sensing teaching point in response to "1. LINE". It is assumed that during the playback control, sensing in response to "2. SF10 (P1)" and "5. SF10 (P2)" is not performed. The reason for this is that the teaching data of the sensing teaching point has already been accumulated. Since the performed flag is set to "1", the control unit 24 starts welding with the welding torch in response to "3. AS". Then, the control unit 24 moves the welding torch through linear interpolation to the second sensing teaching point in response to "4. LINE". The control unit 24 ends the welding with the welding torch in response to "6. AE". In this manner, during the second type of playback control, welding is performed from the first sensing teaching point to the second sensing teaching point. If an instruction to start the second type of playback control that operates the end effector 12 is accepted by the acceptance unit 21 although the teaching data of the sensing teaching point has not been accumulated, the second type of playback control in response to the instruction is not performed because the performed flag is set to "0".

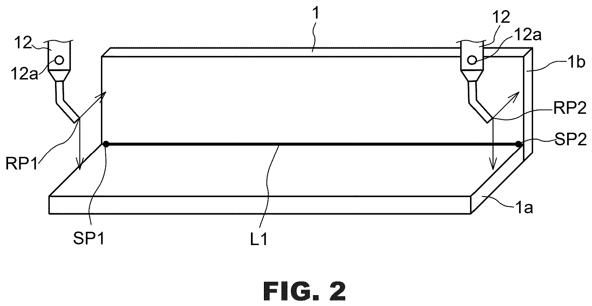

Next, processing that specifies a sensing teaching point based on sensing results of the sensor using the rough teaching point as a reference will be described with reference to FIG. 2. For example, as shown in FIG. 2, in the case of performing fillet welding on a workpiece 1 including a plate 1a placed such that its plane direction is horizontal and a plate 1b placed such that its plane direction is vertical, if teaching data of rough teaching points RP1 and RP2 is accumulated in the storage unit 23 in response to a rough teaching instruction, the control unit 24 may move the end effector 12 as indicated by the arrow in the horizontal direction from the rough teaching point RP1 indicated by the accumulated teaching data, and cause the touch sensor to acquire the position of the plate 1b. More specifically, the control unit 24 may detect that a consumable electrode at an end of the welding torch that is the end effector 12 comes into contact with the plate 1b, thereby acquiring the position of the plate 1b. In a similar manner, the control unit 24 may move the end effector 12 as indicated by the arrow in the vertical direction (perpendicular direction) from the rough teaching point RP1, and acquire the position of the plate 1a using the touch sensor. In this manner, the control unit 24 can acquire distances from the rough teaching point RP1 to the plates 1a and 1b, and specify the position of a sensing teaching point SP1, which is a point that has been moved from the rough teaching point RP1 as indicated by the arrow in the horizontal direction and the arrow in the vertical direction. In this manner, the sensing teaching point SP1 can be specified based on sensing results of the touch sensor using the rough teaching point RP1 as a reference. The sensing teaching point SP1 may be specified by the control unit 24, and teaching data of the sensing teaching point SP1 may be passed to the accumulation unit 22. The accumulation unit 22 may accumulate the teaching data in the storage unit 23. In a similar manner, the sensing teaching point SP2 may be specified based on sensing results of the touch sensor using the rough teaching point RP2 as a reference, and teaching data of the sensing teaching point SP2 may be accumulated in the storage unit 23.

The movement directions of the touch sensor using the rough teaching point RP1 as a reference, that is, the directions of the arrows shown in FIG. 2 may be, for example, predetermined directions in the local coordinate system of the end effector 12 with respect to the rough teaching point RP1 or predetermined directions in the world coordinate system. In the case of the former, the operator who inputs a rough teaching instruction can determine the movement direction of the touch sensor according to the orientation of the end effector 12 when inputting the rough teaching instruction. In FIG. 2, it is assumed that the directions of the arrows, which are predetermined orientations in the local coordinate system of the end effector 12 when inputting the rough teaching instruction, are the normal directions of the plates 1a and 1b.

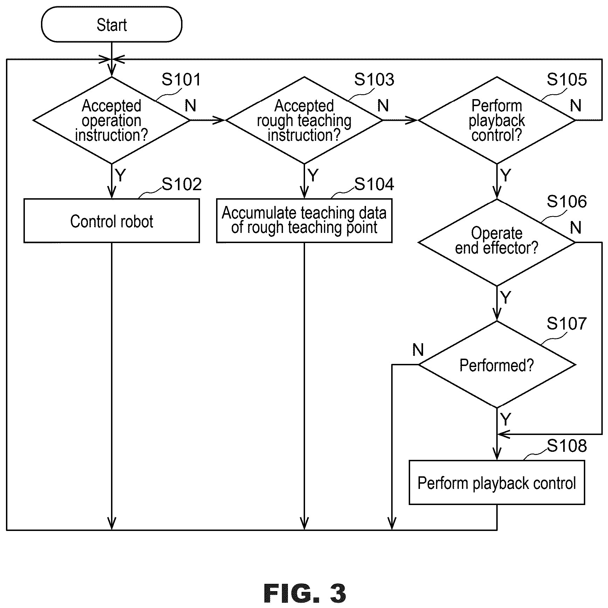

Next, an operation of the controller 20 will be described with refence to the flowchart in FIG. 3.

(Step S101) The acceptance unit 21 determines whether or not it has accepted an operation instruction for the robot 10. If it has accepted an operation instruction for the robot 10, the procedure advances to step S102, or otherwise the procedure advances to step S103. This operation instruction may be, for example, an operation instruction for the robot main body 11. The operator may, for example, set the end effector 12 of the robot 10 to a desired position and a desired posture by inputting this operation instruction.

(Step S102) The control unit 24 controls the robot 10 in response to the operation instruction accepted in step S101. Then, the procedure returns to step S101.

(Step S103) The acceptance unit 21 determines whether or not it has accepted a rough teaching instruction. If it has accepted a rough teaching instruction, the procedure advances to step S104, or otherwise the procedure advances to step S105. The acceptance unit 21 may accept the type of interpolation, operation instructions for the end effector 12, and the like together with the rough teaching instruction.

(Step S104) The accumulation unit 22 accumulates teaching data of the rough teaching point in the storage unit 23 according to the angles of the respective joints of the robot 10. If the type of interpolation, operation instructions for the end effector 12, and the like are accepted as well, the accumulation unit 22 may also accumulate these pieces of teaching data in the storage unit 23. The accumulation unit 22 may accumulate teaching data of a program containing operation instructions for the robot 10, other instructions, and the like according to the type of accepted rough teaching instruction, in the storage unit 23. Then, the procedure returns to step S101.

(Step S105) The control unit 24 determines whether or not to perform playback control. If playback control is to be performed, the procedure advances to step S106, or otherwise the procedure returns to step S101. The control unit 24 may determine to perform playback control, for example, in the case in which the acceptance unit 21 has accepted an instruction to start playback control.

(Step S106) The control unit 24 determines whether or not to operate the end effector 12 in the playback control. If the end effector 12 is to be operated, the procedure advances to step S107, or otherwise the procedure advances to step S108. The control unit 24 may determine whether or not to operate the end effector 12, for example, based on whether or not it has been designated to operate the end effector 12 in the instruction to start playback control accepted by the acceptance unit 21.

(Step S107) The control unit 24 determines whether or not accumulation of the teaching data of the sensing teaching point has been performed. If accumulation of the teaching data of the sensing teaching point has been performed, the procedure advances to step S108, or otherwise the procedure returns to step S101. For example, the control unit 24 may determine that accumulation of the teaching data of the sensing teaching point has been performed in the case in which the performed flag is "1", and determine that the accumulation has not been performed in the case in which the performed flag is "0".

(Step S108) The control unit 24 performs playback control using a teaching point indicated by the teaching data stored in the storage unit 23. For example, in the case of a first instance of playback control, control of the robot 10 using a rough teaching point indicated by the teaching data stored in the storage unit 23, specification of a sensing teaching point based on results of sensing using the rough teaching point as a reference, accumulation of teaching data of the sensing teaching point in the storage unit 23, and the like may be performed. Accordingly, the performed flag may be set to "1". For example, in the case of second and subsequent instances of playback control, control of the robot 10 using the sensing teaching point indicated by the teaching data stored in the storage unit 23 may be performed. If it has been designated to operate the end effector 12 in the instruction to start playback control, the end effector 12 may be accordingly operated. Then, the procedure returns to step S101.

The order of processing in the flowchart in FIG. 3 is merely an example, and the order of the steps may be changed as long as similar results can be obtained. In the flowchart in FIG. 3, the processing ends at power off or at an interruption of terminating processing.

Next, an operation of the robot control system 100 according to this embodiment will be described by way of a specific example. In this specific example, a case will be described in which the robot 10 is a collaborative robot and direct teaching is performed by an operator.

First, the operator places the workpiece 1 at a specified position and then moves the robot 10 by hand such that the welding torch that is the end effector 12 is in the position and posture shown in the left side in FIG. 2 (steps S101 and S102). Then, when the operator presses the button 12a for a short time, the first rough teaching instruction is accordingly passed from the robot 10 to the controller 20. The acceptance unit 21 of the controller 20 accepts the first rough teaching instruction and passes it to the accumulation unit 22 (step S103). Upon receiving the first rough teaching instruction, the accumulation unit 22 acquires the angles of the respective joints of the robot 10 at that time from the control unit 24, and accumulates the following program corresponding to the first rough teaching instruction as the teaching data, together with teaching data of the rough teaching point RP1 according to the acquired angles of the respective joints, in the storage unit 23 (step S104).
1. LINE
2. SF10 (P1)
3. AS

Next, the operator moves the robot 10 again by hand such that the welding torch is in the position and posture shown in the right side in FIG. 2 (steps S101 and S102). Then, when the operator presses the button 12a for a long time, the second rough teaching instruction is accordingly passed from the robot 10 to the controller 20. The acceptance unit 21 of the controller 20 accepts the second rough teaching instruction and passes it to the accumulation unit 22 (step S103). Upon receiving the second rough teaching instruction, the accumulation unit 22 acquires the angles of the respective joints of the robot 10 at that time from the control unit 24, and accumulates the following program corresponding to the second rough teaching instruction as the teaching data, together with teaching data of the rough teaching point RP2 according to the acquired angles of the respective joints, in the storage unit 23 (step S104).
4. LINE
5. SF10 (P2)
6. AE

The operator then operates the teaching pendant 30 to input an instruction to start playback control with welding being off. The instruction to start playback control with welding being off is accordingly passed from the teaching pendant 30 to the controller 20. The instruction to start playback control is accepted by the acceptance unit 21 of the controller 20 and passed to the control unit 24 (step S105). Upon receiving the instruction to start playback control, the control unit 24 determines whether or not to operate the welding torch in the playback control (step S106). In this case, since welding is off, that is, the welding torch is not to be operated, the control unit 24 performs playback control (step S108).

Specifically, the control unit 24 moves the welding torch through linear interpolation to the rough teaching point RP1 indicated by the teaching data in response to "1. LINE" contained in the teaching data, acquires teaching data of the sensing teaching point SP1 corresponding to the rough teaching point RP1, based on sensing results of the sensor using the rough teaching point RP1 as a reference, in response to "2. SF10 (P1)", and passes the thus acquired teaching data to the accumulation unit 22. The accumulation unit 22 accumulates the teaching data of the sensing teaching point SP1 in the storage unit 23 through overwriting of the teaching data of the rough teaching point RP1. Since welding is off, the operation in response to "3. AS" is not performed.

Next, the control unit 24 moves the welding torch through linear interpolation to the rough teaching point RP2 indicated by the teaching data in response to "4. LINE" contained in the teaching data, acquires teaching data of the sensing teaching point SP2 corresponding to the rough teaching point RP2, based on sensing results of the sensor using the rough teaching point RP2 as a reference, in response to "5. SF10 (P2)", and passes the thus acquired teaching data to the accumulation unit 22. The accumulation unit 22 accumulates the teaching data of the sensing teaching point SP2 in the storage unit 23 through overwriting of the teaching data of the rough teaching point RP2. Since welding is off, the operation in response to "6. AE" is not performed. Then, the control unit 24 sets the performed flag stored in the storage unit 23 to "1". The control unit 24 may, for example, move the welding torch to the initial position.

The operator then operates the teaching pendant 30 to input an instruction to start playback control with welding being on. The instruction to start playback control with welding being on is accordingly passed from the teaching pendant 30 to the controller 20. The instruction to start playback control is accepted by the acceptance unit 21 of the controller 20 and passed to the control unit 24 (step S105). Upon receiving the instruction to start playback control, the control unit 24 determines whether or not to operate the welding torch in the playback control (step S106). In this case, since welding is on, that is, the welding torch is to be operated, the control unit 24 determines whether or not accumulation of the teaching data of the sensing teaching point has been performed (step S107). In this case, the performed flag is "1", that is, the accumulation has been performed, and thus the control unit 24 performs playback control (step S108).

Specifically, the control unit 24 moves the welding torch through linear interpolation to the sensing teaching point SP1 indicated by the teaching data in response to "1. LINE" contained in the teaching data. Since sensing has already been performed, the operation in response to "2. SF10 (P1)" is not performed. The control unit 24 starts welding with the welding torch in response to "3. AS".

Next, the control unit 24 moves the welding torch through linear interpolation to the sensing teaching point SP2 indicated by the teaching data in response to "4. LINE" contained in the teaching data. Since sensing has already been performed, the operation in response to "5. SF10 (P2)" is not performed. When the welding torch has moved to the sensing teaching point SP2, the control unit 24 ends the welding with the welding torch in response to "6. AE". In this manner, welding is performed on the workpiece 1 along a weld line L1 from the sensing teaching point SP1 to the sensing teaching point SP2. The control unit 24 may, for example, move the welding torch to the initial position.

The operator may then place a new pre-welded workpiece 1 in place of the welded workpiece 1 at the specified position, and operate the teaching pendant 30 to input an instruction to start playback control with welding being on. By repeating this process, welding can be performed automatically on multiple workpieces 1.

As described above, with the controller 20 according to this embodiment, it is possible to automatically acquire and accumulate teaching data of a more accurate sensing teaching point according to a rough teaching point, which is less accurate, taught by the operator. Then, the controller 20 can cause the robot 10 to perform an operation such as accurate welding on the workpiece 1, by performing playback control using the sensing teaching point. Therefore, the operator does not need to perform teaching of more accurate teaching points, and thus the burden on the operator is reduced. Since teaching data of a rough teaching point is overwritten with teaching data of a sensing teaching point, an operation can be prevented from being performed according to the teaching data of the rough teaching point although the teaching data of the sensing teaching point has been accumulated. Furthermore, since the second type of playback control that operates the end effector 12 can be performed only in the case in which the first type of playback control that does not operate the end effector 12 has already been performed and the teaching data of the sensing teaching point has been accumulated, for example, welding can be prevented from being performed according to the rough teaching point.

In this embodiment, the case has been mainly described in which the operator can specify whether or not to operate the end effector 12 in the playback control, but there is no limitation to this. The controller 20 may accumulate teaching data of the sensing teaching point without operating the end effector 12 during the first instance of playback control, and may control the robot 10 using the sensing teaching point indicated by the teaching data while operating the end effector 12 during the second and subsequent instances of playback control. In this case, for example, the control unit 24 may cause the sensor to perform sensing using, as a reference, each of the two or more rough teaching points indicated by the teaching data stored in the storage unit 23 without operating the end effector 12 during the first instance of playback control. The control unit 24 may specify two or more sensing teaching points respectively corresponding to the two or more rough teaching points, based on sensing results of the sensor during the first instance of playback control, and the accumulation unit 22 may accumulate teaching data of the two or more sensing teaching points in the storage unit 23. For example, during the second and subsequent instances of playback control, the control unit 24 may control the robot 10 and operate the end effector 12 using the two or more sensing teaching points indicated by the teaching data accumulated in the storage unit 23 during the first instance of playback control. In this manner, for example, the first instance of playback control may be performed so that teaching data of two or more sensing teaching points respectively corresponding to two or more rough teaching points indicated by the teaching data stored in the storage unit 23 is acquired and accumulated in the storage unit 23, and the second and subsequent instances of playback control may be performed so that the robot 10 is operated using the two or more sensing teaching points indicated by the teaching data stored in the storage unit 23. Through the second and subsequent instances of playback control, the robot 10 may perform intended operations such as welding. In this case, for example, the operator does not have to specify whether or not to operate the end effector 12 in the playback control.

In this case, if teaching data of the first and second rough teaching points and teaching data containing the above-described program are accumulated in the storage unit 23, during the first instance of playback control, the control unit 24 may move the end effector 12 through linear interpolation to the first rough teaching point in response to "1. LINE", and acquire teaching data of the first sensing teaching point corresponding to the first rough teaching point, based on sensing results of the sensor using the first rough teaching point as a reference, in response to "2. SF10 (P1)". The accumulation unit 22 may accumulate the teaching data of the first sensing teaching point in the storage unit 23 through overwriting of the teaching data of the first rough teaching point. The control unit 24 may move the end effector 12 through linear interpolation to the second rough teaching point in response to "4. LINE", and acquire teaching data of the second sensing teaching point corresponding to the second rough teaching point, based on sensing results of the sensor using the second rough teaching point as a reference, in response to "5. SF10 (P2)". The accumulation unit 22 may accumulate the teaching data of the second sensing teaching point in the storage unit 23 through overwriting of the teaching data of the second rough teaching point. During the first instance of playback control, the operation to start and end welding in response to "3. AS" and "6. AE" are not performed.

Then, during the second and subsequent instances of playback control, the control unit 24 moves the welding torch that is the end effector 12 through linear interpolation to the first sensing teaching point in response to "1. LINE". It is assumed that during the second and subsequent instances of playback control, sensing and replacement of teaching data in response to "2. SF10 (P1)" and "5. SF10 (P2)" are not performed. The control unit 24 starts welding with the welding torch in response to "3. AS". Then, the control unit 24 moves the welding torch through linear interpolation to the second sensing teaching point in response to "4. LINE". The control unit 24 ends the welding with the welding torch in response to "6. AE". In this manner, during the second and subsequent instances of playback control, welding is performed from the first sensing teaching point to the second sensing teaching point.

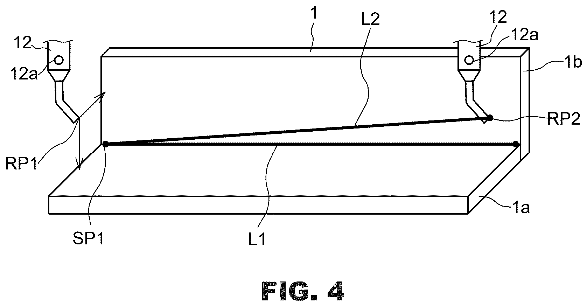

Furthermore, in this embodiment, the case has been mainly described in which sensing is performed using each rough teaching point as a reference and teaching data of a sensing teaching point corresponding to the rough teaching point is acquired and accumulated during the first instance of playback control, that is, the end effector 12 is not operated during the first instance of playback control, but there is no limitation to this. The end effector 12 may be operated from the time of the first instance of playback control. In this case, the control unit 24 may acquire a sensing teaching point only for one rough teaching point, and the accumulation unit 22 may accumulate teaching data of the sensing teaching point only for that one rough teaching point in the storage unit 23. The one rough teaching point may be a rough teaching point corresponding to the start point of an operation such as welding by the end effector 12. For example, if fillet welding is performed on the workpiece 1 as shown in FIG. 4, teaching data of the sensing teaching point SP1 corresponding only to the rough teaching point RP1 may be acquired and accumulated.

Furthermore, the control unit 24 may control the robot 10, using the one sensing teaching point, a rough teaching point other than the rough teaching point corresponding to the sensing teaching point, and sensing results of the sensor included in the robot 10. The sensing results of the sensor may be used, for example, to specify the movement path of the end effector 12. As an example, the sensing results may be used to specify weld lines and operation lines, and the end effector 12 may be moved along the specified weld lines and operation lines. This movement control of the end effector 12 based on the sensing results may be, for example, tracking control along lines such as the weld lines and operation lines based on the sensing results. In this embodiment, a case will be mainly described in which the control of the robot 10 based on sensing results of the sensor included in the robot 10 is tracking control. As an example, the control unit 24 may perform tracking control based on sensing results of the sensor included in the robot 10 in the case of moving the end effector 12 from one sensing teaching point toward a rough teaching point.

The sensor of the robot 10 used in this control may be, for example, the same as or different from the sensor used to specify the sensing teaching point. The sensor used in this control may be, for example, a laser sensor, a vision sensor, or an arc sensor. If the sensor is an arc sensor, for example, the position of a weld line in weaving welding may be specified based on sensing results of the arc sensor. If the touch sensor of the robot 10 is used to acquire a sensing teaching point, the robot 10 may have a different sensor than the touch sensor for this control.

In this case, 1. to 5. of the following program may be accumulated in the storage unit 23 in response to the acceptance of the first rough teaching instruction, and 6. to 9. of the following program may be accumulated in the storage unit 23 in response to the acceptance of the second rough teaching instruction.
1. LINE
2. SF10 (P1)
3. AS
4. WS
5. ST
6. LINE
7. ET
8. WE
9. AE

In the program, WS is an operation instruction to start weaving, and WE is an operation instruction to end the weaving. ST is an instruction to start tracking control based on sensing results, and ET is an instruction to end the tracking control. It is assumed that SF10 (P1) in this case includes, in addition to the instruction of SF10 (P1) described above, an instruction to move the end effector 12 according to the teaching data of the sensing teaching point after replacement. Similar to the above explanation in this embodiment, if 1. to 5. of the above program are accumulated as teaching data together with the teaching data of the rough teaching point RP1 and 6. to 9. of the above program are accumulated as teaching data together with the teaching data of the rough teaching point RP2, the following playback control may be performed according to the teaching data.

First, the control unit 24 moves the welding torch to the rough teaching point RP1, acquires teaching data of the sensing teaching point SP1 corresponding to the rough teaching point RP1, based on sensing results of the touch sensor using the rough teaching point RP1 as a reference, and passes the teaching data to the accumulation unit 22. The accumulation unit 22 accumulates the teaching data of the sensing teaching point SP1 in the storage unit 23 through overwriting of the teaching data of the rough teaching point RP1. The control unit 24 moves the welding torch to the sensing teaching point SP1 indicated by the overwritten teaching data, starts welding and weaving with the welding torch, and starts sensing using the arc sensor and tracking control based on the sensing results. The control unit 24 moves the welding torch through linear interpolation to the rough teaching point RP2. If tracking control based on the results of sensing with the arc sensor is not performed, the welding torch moves along a straight line L2, but in this case, the welding torch is moved through tracking control based on sensing results of the arc sensor. As a result, the control unit 24 controls the welding torch to move along the weld line L1 on the joint of the plates 1a and 1b. When welding along the weld line L1 is completed, the tracking control, the weaving, and the welding are ended. Then, the welding torch may be moved to the initial position.

In this case, welding with the welding torch, that is, an operation with the end effector 12 can be performed from the time of the first instance of playback control, and the period from teaching to playback with an operation of the end effector 12 can be shortened.

In this example, the case has been mainly described in which tracking control is performed based on sensing results of the arc sensor, but tracking control may be performed based on sensing results of another sensor. For example, the position of the weld line L1 may be specified based on sensing results of a laser sensor or a vision sensor, and the welding torch may be moved along the weld line L1. The tracking control using a laser sensor or a vision sensor is already known in the tracking control of robots, and thus a detailed description thereof has been omitted. In FIG. 4, if the angle formed between a straight line L1 and the straight line L2 is large, it becomes difficult to perform appropriate tracking control. Therefore, it is preferable for the angle to be small. As an example, the angle may be 10 degrees or less.

Furthermore, in this embodiment, the case has been mainly described in which the robot 10 is a welding robot, especially an arc welding robot using a consumable electrode, but as described above, the robot 10 may be a transport robot or the like other than a welding robot. If the robot 10 is a transport robot, for example, the position of an object to be transported, which is an object to be gripped, may be specified through sensing using the rough teaching point as a reference so that the object to be transported can be moved from a first position to a second position. In this case, as an example, the object to be transported may be placed at both the first and second positions when sensing is performed using the rough teaching points as a reference.

Furthermore, in this embodiment, the case has been mainly described in which the program includes an instruction to replace teaching data of a rough teaching point with teaching data of a sensing teaching point, but there is no limitation to this. For example, if teaching data of a rough teaching point is stored in the storage unit 23, the controller 20 may perform processing that automatically replaces teaching data of the rough teaching point with teaching data of the sensing teaching point. As an example, the accumulation unit 22 does not have to overwrite the teaching data of the rough teaching point with the teaching data of the sensing teaching point corresponding to the rough teaching point. In this case, both the teaching data of the rough teaching point and the teaching data of the sensing teaching point corresponding to the rough teaching point may be stored in the storage unit 23. If both the teaching data of the rough teaching point and the teaching data of the sensing teaching point corresponding to the rough teaching point are stored in the storage unit 23, the control unit 24 may operate the robot 10 using the sensing teaching point indicated by the teaching data during playback control.

Furthermore, in the foregoing embodiment, each process or each function may be realized through centralized processing using a single apparatus or a single system, or may be realized through distributed processing using multiple apparatuses or multiple systems.

In the foregoing embodiment, each constituent element may be configured by dedicated hardware, or alternatively, constituent elements that can be realized by software may be realized by executing a program. For example, each constituent element may be realized by a program execution unit such as a CPU reading and executing a software program stored in a recording medium such as a hard disk or a semiconductor memory. At the time of executing the program, the program execution unit may execute the program while accessing the storage unit or the recording medium. Furthermore, this program may be executed by downloading from a server or the like, or may be executed by reading a program stored in a predetermined recording medium (e.g., an optical disk, a magnetic disk, a semiconductor memory, etc.). Furthermore, the program may be used as a program for constituting a program product. Furthermore, a computer that executes the program may be a single computer or may be multiple computers. That is to say, centralized processing may be performed, or distributed processing may be performed.

Furthermore, the foregoing embodiment is an example for specific implementation of the present invention and is not intended to limit the technical scope of the invention. The technical scope of the invention is indicated by the claims rather than by the foregoing description, and changes which come within the wording and equivalent meanings of the scope of the claims are intended to be encompassed therein.

## Claims

1. A robot control system comprising a robot that has multiple joints and a controller that controls the robot,
wherein the robot has a sensor for sensing a detection target,
the controller includes:
an acceptance unit that accepts a rough teaching instruction regarding a rough teaching point, which is a tentative teaching point;
an accumulation unit that accumulates teaching data of the rough teaching point according to angles of the respective joints of the robot when the rough teaching instruction is accepted; and
a control unit that causes the sensor to perform sensing using the rough teaching point as a reference, and uses sensing results of the sensor to specify a sensing teaching point, which is a teaching point that corresponds to the rough teaching point and is based on the sensing results,
the accumulation unit accumulates teaching data of the sensing teaching point, and
the control unit controls the robot using the sensing teaching point.

2. The robot control system according to claim 1,
wherein the robot is an arc welding robot, and
the sensor is a touch sensor.

3. The robot control system according to claim 1,
wherein the acceptance unit accepts multiple types of rough teaching instructions, and
the accumulation unit accumulates an operation instruction that is for the robot and corresponds to a type of rough teaching instruction accepted by the acceptance unit, together with the teaching data of the rough teaching point.

4. The robot control system according to any one of claims 1 to 3,
wherein the accumulation unit overwrites the teaching data of the rough teaching point with teaching data of the sensing teaching point corresponding to the rough teaching point.

5. The robot control system according to any one of claims 1 to 3,
wherein the robot has an end effector,
the accumulation unit accumulates teaching data of two or more rough teaching points, and
the control unit causes the sensor to perform sensing using, as a reference, each of the two or more rough teaching points without operating the end effector during a first instance of playback control, and controls the robot using two or more sensing teaching points and operates the end effector during second and subsequent instances of playback control.

6. The robot control system according to any one of claims 1 to 3,
wherein the robot has an end effector,
the accumulation unit accumulates teaching data of two or more rough teaching points,
the control unit performs a first type of playback control that does not operate the end effector and a second type of playback control that operates the end effector, and
the second type of playback control is performed only in a case in which two or more sensing teaching points respectively corresponding to the two or more rough teaching points are specified through the first type of playback control and teaching data of the two or more sensing teaching points is accumulated.

7. The robot control system according to any one of claims 1 to 3,
wherein the accumulation unit accumulates teaching data of a sensing teaching point only for one rough teaching point, and
the control unit controls the robot, using the one sensing teaching point, a rough teaching point other than the rough teaching point corresponding to the sensing teaching point, and sensing results of the sensor included in the robot.
